# EUROPEAN PATENT APPLICATION

(11) **EP 4 564 687 A1**
(43) Date of publication of application: **04.06.2025**
(21) Application number: 23844827.8
(22) Date of filing: 06.03.2023
(51) Int. Cl.: H04B 1/40

(54) **MILLIMETER WAVE TRANSMITTER AND RECEIVER APPARATUS AND COMMUNICATION SYSTEM**

(30) Priority: 27.07.2022 CN 202210891706
(71) Applicant: ZTE CORPORATION, Shenzhen, Guangdong 518057 (CN)
(72) Inventor: YU, Susheng, Shenzhen, Guangdong 518057 (CN); WANG, Xuehong, Shenzhen, Guangdong 518057 (CN); TIAN, Zhiji, Shenzhen, Guangdong 518057 (CN)
(74) Representative: Mozzi, Matteo
(86) International application number: PCT/CN2023/079866
(87) International publication number: WO 2024/021609

(57) **Abstract**

The present disclosure relates to a millimeter wave transceiver device and a communication system. The device comprises: a digital intermediate frequency module, at least two millimeter wave transmission modules and at least two millimeter wave remote-end modules; the digital intermediate frequency module is connected to at least two millimeter wave transmission modules, and the at least two millimeter wave transmission modules are connected to at least two millimeter wave remote-end modules in one-to-one correspondence; the digital intermediate frequency module is configured to send the downlink radio-frequency sending signal, and receive the uplink radio-frequency receiving signal; the millimeter wave remote-end module is configured to radiate and transmit a downlink millimeter wave transmission signal, radiate and receive the uplink millimeter wave receiving signal, convert the uplink radio-frequency receiving signal, and convert the downlink radio-frequency sending signal and a downlink millimeter wave transmission signal; the millimeter wave transmission module is configured to transmit downlink radio-frequency sending signal and uplink radio-frequency receiving signal between the digital intermediate frequency module and the millimeter wave remote-end module.

## Description

### Cross-Reference to Related Application

This disclosure claims priority to Chinese Patent Application No. CN202210891706.6, filed on July 27, 2022, and entitled "MILLIMETER WAVE TRANSMITTER AND RECEIVER APPARATUS AND COMMUNICATION SYSTEM", which is incorporated herein by reference in its entirety.

### Technical Field

The present disclosure relates to the field of communications technologies, and in particular, to a millimeter wave transceiver device and a communication system.

### Background

A millimeter wave communication system generally comprises a network management device, a baseband processing device, and a millimeter wave transceiver device. A millimeter wave base station function is completed by the baseband processing device and the millimeter wave transceiver device. Currently, a millimeter wave transceiver device is generally an integrated AAU (Active Antenna Unit) architecture. The AAU generally includes an integrated baseband processing unit, a digital intermediate frequency processing unit, an nTnR (n Transmitter and Receiver) transceiver unit, and a super-large-scale antenna array. Although the described AAU has powerful functions, the size and weight of the AAU are still large, which is not conducive to shape innovation and has poor environmental friendliness. Furthermore, for a commercial area and an indoor scenario that have hot spot high-capacity requirements, deployability is poor, which affects the promotion of millimeter wave products.

### Summary

In view of this, in order to solve the described technical problem or partial technical problem, the present disclosure provides a millimeter wave transceiver device and a communication system.

According to a first aspect, the present disclosure provides a millimeter wave transceiver device, comprising: a digital intermediate frequency module, at least two millimeter wave transmission modules, and at least two millimeter wave remote-end modules; wherein the digital intermediate frequency module is connected to at least two millimeter wave transmission modules, and the at least two millimeter wave transmission modules are connected to at least two millimeter wave remote-end modules in one-to-one correspondence; the digital intermediate frequency module is configured to send a downlink radio-frequency sending signal, and receive an uplink radio-frequency receiving signal; the millimeter wave remote-end module is configured to radiate and transmit a downlink millimeter wave transmission signal, and radiate and receive an uplink millimeter wave receiving signal, and is also configured to convert the downlink radio-frequency sending signal and the downlink millimeter wave transmission signal, and convert the uplink radio-frequency receiving signal and an uplink millimeter wave receiving signal; the millimeter wave transmission module is configured to transmit downlink radio-frequency sending **signal** and uplink radio-frequency receiving signal between the digital intermediate frequency module and the millimeter wave remote-end module.

In a second aspect, the present disclosure provides a millimeter wave communication system, including a network management device, a baseband processing device, and the foregoing millimeter wave transceiver device that are connected in sequence.

### Brief Description of the Drawings

Figure 1 is a schematic structural diagram of a millimeter wave transceiver device according to the present disclosure;
Figure 2 is a schematic structural diagram of a digital intermediate frequency module according to an embodiment of the present disclosure;
Figure 3 is a schematic structural diagram of a first controlling sub-module according to an embodiment of the present invention;
Figure 4 is a schematic structural diagram of a millimeter wave transmission module according to an embodiment of the present disclosure;
Figure 5 is a schematic structural diagram of a millimeter wave remote-end module according to an embodiment of the present disclosure;
Figure 6 is a schematic structural diagram of a transceiving link sub-module according to an embodiment of the present disclosure;
Figure 7 is a schematic diagram of a downlink process of a millimeter wave transceiver device according to the present disclosure;
Figure 8 is a schematic diagram of an uplink process of a millimeter wave transceiver device according to the present disclosure;
Figure 9 is a schematic structural diagram of a millimeter wave communication system according to an embodiment of the present disclosure;

In the above figures:
10, a digital intermediate-frequency module; 11, baseband processing sub-module; 12, an intermediate frequency processing sub-module; 13, first control sub-module; 131, first main control unit; 1311, first main control sub-unit; 1312. a first modulation sub-unit; 1313, first demodulation sub-unit; 132, a clock local oscillator unit; 14, first power supply sub-module;
20, millimeter wave transmission module; 21, a first signal processing sub-module; 211, first multiplexing and separating unit; 2111, first signal multiplexing sub-unit; 2112, first signal separating sub-unit; 212, first analog optical transceiver unit; 2121, first laser emitting sub-unit; 2122, first laser receiving sub-unit; 2123, first optical combining sub-unit; 2124. first optical splitting sub-unit; 22, optical fiber sub-module; 23, a second signal processing sub-module; 231, second multiplexing and separating unit; 2311, second signal multiplexing sub-unit; 2312, a second signal separating sub-unit; 232, a second analog optical transceiver unit; 2321, second laser emitting sub-unit; 2322, second laser receiving sub-unit; 2323, second optical combining sub-unit; 2324, second optical splitting sub-unit;
30, a millimeter wave remote-end module; 31, a transceiving link sub-module; 311, frequency conversion unit; 3111, up conversion sub-unit; 3112, down-conversion sub-unit; 312, front-end unit; 3121, power amplification sub-unit; 3122, low noise amplification sub-unit; 3123, a filtering sub-unit; 313, wave control unit; 314, array antenna unit; 32, second control sub-module; 33. a second power supply sub-module.

### Detailed Description of the Embodiments

To make the objectives, technical solutions, and advantages of the present disclosure clearer, the following clearly and completely describes the technical solutions in the present disclosure with reference to the accompanying drawings in the present disclosure. Apparently, the embodiments to be described are merely a part rather than all of the embodiments of the present disclosure. All other embodiments obtained by a person of ordinary skill in the art based on the embodiments of the present disclosure without creative efforts shall belong to the scope of protection of the present disclosure.

In order to facilitate understanding of the present disclosure, the present disclosure will be further explained and illustrated below with reference to the accompanying drawings and specific embodiments, which are not intended to limit the present disclosure.

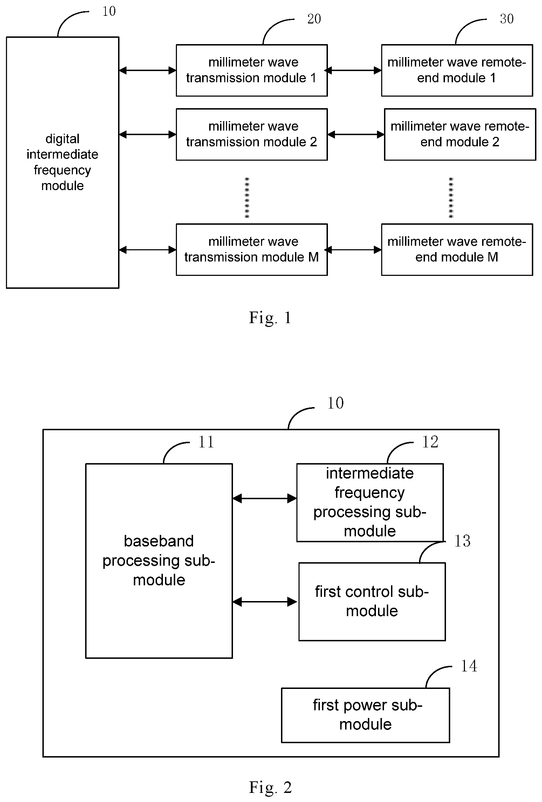

The present disclosure provides a millimeter wave transceiver device. As shown in figure 1, the millimeter wave transceiver device 100 comprises a digital intermediate frequency module 10, at least two millimeter wave transmission modules 20, and at least two millimeter wave remote-end modules 30. The digital intermediate frequency module 10 is connected to at least two millimeter wave transmission modules 20, and the at least two millimeter wave transmission modules 20 are connected to at least two millimeter wave remote-end modules 30 in one-to-one correspondence, that is, the number of the millimeter wave transmission modules 20 is consistent with the number of the millimeter wave remote-end modules 30, both being M (M ≥ 2), and the number of the transceiving channels of the millimeter wave remote-end modules 30 is N (N ≥ 2).

The digital intermediate frequency module 10 is configured to send a downlink radio-frequency sending signal and receive an uplink radio-frequency receiving signal. In an exemplary embodiment, the digital intermediate frequency module 10 is an aggregation processing module of at least two millimeter wave remote-end modules 30, the digital intermediate frequency module 10 supports signal processing of M*N transceiving channels, and the digital intermediate frequency module 10 performs signal interaction with the baseband processing device 200, when receiving the downlink baseband signals sent by the baseband processing device 200, perform radio-frequency transmission processing on the downlink baseband signals, similar to the **downlink** radio-frequency signal transmitted by each millimeter wave remote-end module 30, when receiving an uplink radio-frequency receiving signal used for signal transmission by each of the millimeter wave remote-end modules 30, performing mid-radio-frequency receiving processing on the uplink radio-frequency receiving signal, obtain an uplink baseband signal, and upload the uplink baseband signal to the baseband processing device 200, thereby implementing signal receiving and sending of the millimeter wave transceiver device. The digital intermediate frequency module 10 is provided with an eCPRI (evolved Common Public Radio Interface) interface, and the digital intermediate frequency module 10 performs signal interaction with the baseband processing device 200 via the eCPRI interface to obtain a downlink baseband signal and upload an uplink baseband signal.

In this example, the downlink baseband signal includes a downlink baseband transmit service signal, a clock reference signal, and a control instruction signal, the uplink baseband signal comprises an uplink baseband receiving service signal and a response response signal, and the downlink radio-frequency sending signal corresponding to each millimeter wave remote-end module 30 comprises at least two first service signals and a first control signal (i.e. comprising a clock reference signal, a millimeter wave local oscillator signal and a control instruction signal), the uplink radio-frequency receiving signal corresponding to each millimeter wave remote-end module 30 comprises at least two second service signals and a second control signal (i.e. a response signal).

In this example, referring to figure 2, the digital intermediate frequency module 10 includes a baseband processing sub-module 11, and an intermediate frequency processing sub-module 12 and a first control sub-module 13 that are connected to the baseband processing sub-module 11. The baseband processing sub-module 11 is connected to the baseband processing device 200. The intermediate frequency processing sub-module 12 and the first control sub-module 13 are both connected to at least two millimeter wave transmission modules 20. The baseband processing sub-module 11 is configured to interactive baseband signals with the baseband processing device 200 to receive downlink baseband signals sent by the baseband processing device 200 and send uplink baseband signals to the baseband processing device 200. The intermediate frequency processing sub-module 12 is configured to send the at least two first service signals obtained by processing according to the downlink baseband signals to the millimeter wave transmission module 20, and process the at least two second service signals transmitted by the millimeter wave transmission module 20 to generate uplink baseband signals. The first control sub-module 13 is configured to send a first control signal obtained through processing based on the downlink baseband signal to the millimeter wave transmission module 20 and receive a second control signal transmitted by the millimeter wave transmission module 20, where the second control signal is a reply response signal to the first control signal. In an exemplary example, the second service signal and the second control signal are sent by the millimeter wave remote-end module 30 to the millimeter wave transmission module 20.

In an exemplary example, the baseband processing sub-module 11 is provided with an eCPRI interface, and the baseband processing sub-module 11 interactives baseband signals with the baseband processing device 200 via the eCPRI interface. When receiving the downlink baseband signal sent by the baseband processing device 200, the baseband processing sub-module 11 sends the downlink baseband transmission service signal to the IF processing sub-module 12, and sends the clock reference signal and the control instruction signal to the first control sub-module 13. The middle frequency sub-module processes (digital conversion, digital-to-analog conversion, amplification, and so on) the downlink baseband transmission service signal to obtain at least two first service signals corresponding to each millimeter wave remote-end module 30. It should be noted that, the number of the first service signals is consistent with the number of the transceiver device channels of the millimeter wave remote-end module 30. For example, when the millimeter wave remote-end module 30 is a millimeter wave remote-end module 30 of a 2T2R channel, the number of the first service signals is two. When the intermediate frequency processing sub-module 12 receives at least two second service signals that are transmitted by the millimeter wave transmission module 20 and correspond to the millimeter wave remote-end modules 30, generate uplink baseband received service signals from at least two second service signals, and transmit the uplink baseband received service signals to the baseband processing sub-module 11, so that the baseband processing sub-module 11 performs uplink baseband signal interaction with the baseband processing device 200, the number of the second service signals is consistent with the number of the transceiver device channels of the millimeter wave remote-end module 30. The obtaining of the second service signal and the second control signal is described in the following, and is not further described in this embodiment. When receiving the clock reference signal and the control instruction signal, the first control sub-module 13 processes the clock reference signal to obtain the radio-frequency reference signal and the millimeter wave local oscillator signal required for the operation of the millimeter wave remote-end module 30. In this example, the radio-frequency reference signal, the millimeter wave local oscillator signal, and the control instruction signal may be combined into a first control signal. The clock reference signal is used for realizing time synchronization between the digital intermediate frequency module 10 and the millimeter wave remote-end module 30.

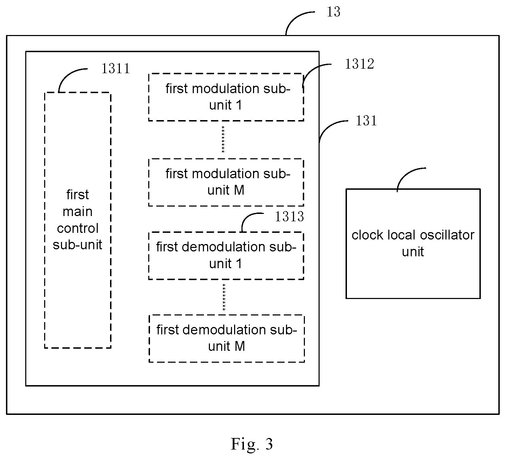

In an exemplary example, referring to figure 3, the first control sub-module 13 in this embodiment includes a first main control unit 131 and a clock local oscillator unit 132, the first main control unit 131 and the clock local oscillator unit 132 are both connected to the millimeter wave transmission module 20, and the first main control unit 131 and the clock local oscillator unit 132 are also both connected to the baseband processing sub-module 11, the clock local oscillator unit 132 is used for receiving the clock reference signal sent by the baseband processing sub-module 11 and processing the clock reference signal, a clock and a synchronization signal required for the running of the generation module itself are generated, and a radio-frequency reference signal and a millimeter wave local oscillator signal required for the running of each millimeter wave remote-end module 30 are obtained, and sends the radio-frequency reference signal and the millimeter wave local oscillator signal to the millimeter wave transmission module 20. The first main control unit 131 is configured to receive the control instruction signal sent by the baseband processing sub-module 11 and receive the second control signal sent by the millimeter wave transmission module 20. The first main control unit 131 includes a first main control sub-unit 1311, at least two first modulation sub-units 1312, and at least two first demodulation sub-units 1313. The first main control sub-unit 1311 is connected to the at least two first modulation sub-units 1312. The first main control sub-unit 1311 is further connected to the at least two first demodulation sub-units 1313. The number of the first modulation sub-units 1312 is the same as that of the first demodulation sub-units 1313, and is the same as that of the millimeter wave remote-end modules 30 connected to the digital intermediate frequency module 10. The first modulation sub-unit 1312 is an OOK modulation sub-unit, and the first demodulation sub-unit 1313 is an OOK demodulation sub-unit, when receiving the control instruction signal, the first main control sub-unit 1311 performs a corresponding control operation, and sends the control instruction signal related to the millimeter wave remote-end module 30 to the first modulation sub-unit 1312, in this way, the first modulation sub-unit 1312 sends the modulated control instruction signal to the millimeter wave transmission module 20. When receiving the second control signal sent by the millimeter wave transmission module 20, the first demodulation sub-unit 1313 performs OOK demodulation processing on the second control signal, and sends the processed second control signal to the first main control sub-unit 1311 to confirm a control reply response.

In this example, referring to figure 2, the digital intermediate frequency module 10 further includes a first power supply sub-module 14. The first power supply sub-module 14 is configured to supply power to the baseband processing sub-module 11, the intermediate frequency processing sub-module 12, and the first control sub-module 13.

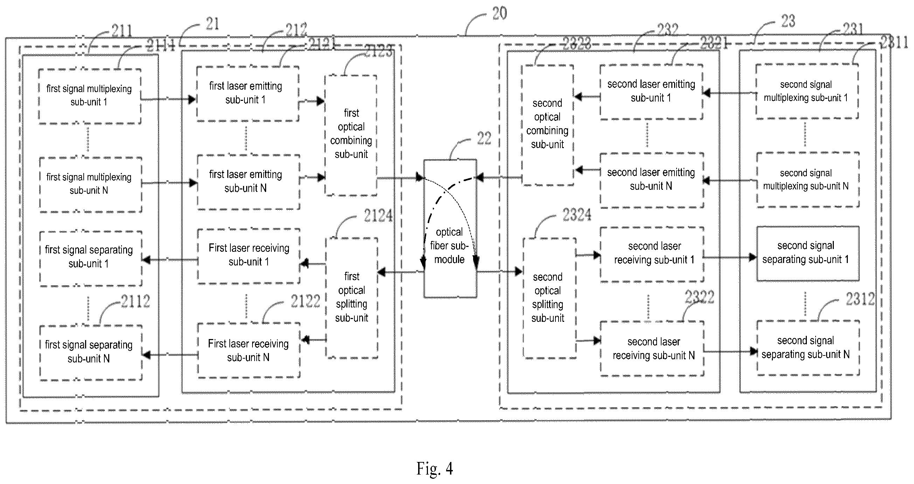

The millimeter wave transmission module 20 is configured to transmit downlink radio-frequency sending **signal** and uplink radio-frequency receiving signal between the digital intermediate frequency module 10 and the millimeter wave remote-end module 30. Referring to figure 4, each millimeter wave transmission module 20 includes a first signal processing sub-module 21, an optical fiber sub-module 22, and a second signal processing sub-module 23 that are connected in sequence, the first signal processing sub-module 21 is also connected with the digital intermediate-frequency module 10. In an exemplary embodiment, the first signal processing sub-module 21 is further connected to a clock local oscillator unit 132, an intermediate frequency processing sub-module 12, a first modulation sub-unit 1312 and a first demodulation sub-unit 1313, the second signal processing sub-module 23 is further connected to the millimeter wave remote-end module 30. The first signal processing sub-module 21 is configured to convert a downlink radio-frequency sending signal into a first optical signal and convert a second optical signal into an uplink radio-frequency receiving signal; the second signal processing sub-module 23 is configured to convert the uplink radio-frequency receiving signal into a second optical signal and convert the first optical signal into a downlink radio-frequency sending signal; the optical fiber sub-module 22 is configured to transmit the first optical signal and the second optical signal between the first signal processing sub-module 21 and the second signal processing sub-module 23. In this example, during signal transmission between the digital intermediate frequency module 10 and the millimeter wave remote-end module 30 of the millimeter wave transceiver device, the transmitting side converts the downlink radio-frequency sending signal or the uplink radio-frequency receiving signal into corresponding optical signals, and performs directional transmission on the optical fiber sub-module 22, at a receiving side, an optical signal is restored to a downlink radio-frequency sending signal or an uplink radio-frequency receiving signal, thereby implementing long-distance transmission of a millimeter wave signal based on the MOF technology on an optical fiber link. Furthermore, each millimeter wave transmission module 20 is connected to one millimeter wave remote-end module 30, and the digital intermediate-frequency module 10 and the plurality of millimeter wave remote-end modules 30 are in a star architecture interconnected through optical fibers, it is more beneficial for cooperation among super-large-scale antenna arrays of a plurality of millimeter-wave remote-end modules 30 to form a distributed millimeter-wave super-large-scale MIMO effect, the wireless channel coordination gain of the millimeter wave communication is greatly improved, and the shortcomings of a large insertion loss and poor penetration of the millimeter wave are effectively overcome.

In an exemplary example, in order to improve the utilization efficiency of the optical fibers, in the embodiment, with continued reference to figure 4, a first signal processing sub-module 21 comprises a first multiplexing and separating unit 211 and a first analog optical transceiver unit 212, the first multiplexing and separating unit 211 is further connected to the digital intermediate frequency module 10. In an exemplary embodiment, the first multiplexing and separating unit 211 is further connected to the clock local oscillator unit 132, the intermediate frequency processing sub-module 12, the first modulation sub-unit 1312, and the first demodulation sub-unit 1313. The first analog optical transceiver unit 212 is further connected to the optical fiber sub-module 22. The first multiplexing and separating unit 211 is used for multiplexing at least two first service signals and a first control signal into at least two downlink analog multiplexing signals and separating at least two uplink analog multiplexing signals into at least two second service signals and a second control signal. The first analog optical transceiver device 212 is configured to convert at least two downlink analog multiplexing signals into a first optical signal and convert a second optical signal into at least two uplink analog multiplexing signals. Converting the second optical signal into the uplink analog multiplexing signal is described in the following, and details are not described herein again in this embodiment. It should be noted that, the number of the first service signals is consistent with the number of the downlink analog multiplexing signals, and similarly, the number of the second service signals is consistent with the number of the uplink analog multiplexing signals.

In an exemplary example, with continued reference to figure 4, one first multiplexing and separating unit 211 includes at least two first signal multiplexing sub-units 2111 and at least two first signal separating sub-units 2112, where the number of the first signal multiplexing sub-units 2111 is consistent with that of the first signal separating sub-unit 2112, and both the first signal multiplexing sub-unit 2111 and the first signal separating sub-unit 2112 are consistent with the number of the transceiver device channels of the millimeter wave remote-end module 30. For example, when the millimeter wave remote-end module 30 has two transceiver device channels, the first signal multiplexing sub-unit 2111 and the first signal separating sub-unit 2112 both have two transceiver device channels. The at least two first signal multiplexing sub-units 2111 are connected to the digital intermediate frequency module 10. In an exemplary example, the at least two first signal multiplexing sub-units 2111 are respectively connected to the clock local oscillator unit 132 and the intermediate frequency processing sub-module 12, where one first signal multiplexing sub-unit 2111 is connected to one first modulation sub-unit 1312. The at least two first signal separating sub-units 2112 are connected to the digital intermediate frequency module 10. In an exemplary embodiment, the at least two first signal separating sub-units 2112 are separately connected to the intermediate frequency processing sub-module 12, where one first signal separating sub-unit 2112 is connected to one first demodulating sub-unit 1313. The at least two first signal multiplexing sub-units 2111 are further connected to the first analog optical transceiver device 212, and the at least two first signal separation sub-units 2112 are further connected to the first analog optical transceiver device 212. Each first signal multiplexing sub-unit 2111 is configured to multiplex the obtained first service signal and first control signal into a downlink analog multiplexing signal, and transmit the downlink analog multiplexing signal to the first analog optical transceiver device 212. Each first signal separating sub-unit 2112 is configured to separate the uplink analog multiplexing signal received and converted by the first analog optical transceiver device 212 into a second service signal and a second control signal.

In an exemplary example, with continued reference to figure 4, one first analog optical transceiver unit 212 includes at least two first laser emitting sub-units 2121, at least two first laser receiving sub-units 2122, a first optical combining sub-unit 2123, and a first optical splitting sub-unit 2124, the at least two first laser emitting sub-units 2121 are connected to the first optical combining sub-unit 2123, and the at least two first laser emitting sub-units 2121 are further connected to the first multiplexing and separating unit 211, that is, the at least two first laser emitting sub-units 2121 are further connected to the at least two first signal multiplexing sub-units 2111 in a one-to-one manner. The at least two first laser receiving sub-units 2122 are connected to the first optical splitting sub-unit 2124, the at least two first laser receiving sub-units 2122 are further connected to the first multiplexing and separating unit 211, that is, the at least two first laser receiving sub-units 2122 are further connected to the at least two first signal separating sub-units 2112 in a one-to-one correspondence manner, and both the first optical splitting sub-unit 2123 and the first optical splitting sub-unit 2124 are connected to the optical fiber sub-module 22. The first laser emitting sub-unit 2121 is configured to convert the received downlink analog multiplexing signal into a corresponding single-wavelength optical signal, the first optical combining sub-unit 2123 is configured to split and combine the single-wavelength optical signals generated by the at least two first laser emitting sub-units 2121 into a first optical signal corresponding to the downlink analog multiplexing signal, and sends the first optical signal to the optical fiber sub-module 22 for transmission of the optical signal. The first optical splitting sub-unit 2124 is configured to receive the second optical signal transmitted by the optical fiber sub-module 22, and split the second optical signal into optical signals of individual wavelengths, the uplink analog multiplexing signals are generated by converting the received single-wavelength optical signals, and send the uplink analog multiplexing signals to the corresponding first signal separating sub-unit 2112, so as to separate uplink analog multiplexing signals (at least two second service signals and a second control signal). It should be noted that the first laser emitting sub-unit 2121 is an analog laser transmitter, and the first laser receiving sub-unit 2122 is an analog laser receiver. The working principle of the first laser emitting sub-unit 2121 is as follows: an analog electric signal is input to a laser diode after being subjected to an impedance matching process, is emitted into a light wave, and is then subjected to an optical isolation process, so as to achieve isolation of different wavelengths and receiving and sending analog optical signals in different directions. The working principle of the first laser receiving sub-unit 2122 is as follows: an analog optical signal is restored to an electrical signal through a photoelectric conversion diode, and the analog electrical signal is output after impedance matching.

In an exemplary example, similarly, in order to improve the utilization efficiency of an optical fiber, in this example, with continued reference to figure 4, one second signal processing sub-module 23 includes a second multiplexing and separation unit 231 and a second analog optical unit 232 connected to each other, the second multiplexing and separation unit 231 is further connected to the millimeter wave remote-end module 30, and the second analog optical transceiver unit 232 is further connected to the optical fiber sub-module 22. The second multiplexing and separating unit 231 is configured to multiplex at least two second service signals and a second control signal into at least two uplink analog multiplexing signals, and separate at least two downlink analog multiplexing signals into at least two first service signals and a first control signal; the second analog optical transceiver unit 232 is configured to convert at least two uplink analog multiplexing signals into a second optical signal and convert the first optical signal into at least two downlink analog multiplexing signals.

In an exemplary example, with continued reference to figure 4, one second multiplexing and separating unit 231 includes at least two second signal multiplexing sub-units 2311 and at least two second signal separating sub-units 2312. The number of the second signal multiplexing sub-units 2311 is consistent with that of the second signal separating sub-unit 2312. The number of the second signal multiplexing sub-units 2311 is consistent with that of the transceiver device channels of the millimeter wave remote-end module 30. For example, when the number of the transceiver device channels of the millimeter wave remote-end module 30 is two, the number of the second signal multiplexing sub-unit 2311 and the number of the second signal separating sub-unit 2312 are both two. The at least two second signal multiplexing sub-units 2311 are connected to the second analog optical transceiving unit 232, the at least two second signal separation sub-units 2312 are connected to the second analog optical transceiving unit 232, the at least two second signal multiplexing sub-units 2311 are further connected to the millimeter wave remote-end module 30, and the at least two second signal separation sub-units 2312 are further connected to the millimeter wave remote-end module 30. The second signal multiplexing sub-unit 2311 is configured to multiplex the obtained second service signal and the second control signal into an uplink analog multiplexing signal, and transmit the uplink analog multiplexing signal to a second analog optical transceiver unit 232, and send the signal (the first service signal and the first control signal) obtained after the separation to the millimeter wave remote-end module 30.

In an exemplary example, one second analog optical transceiver unit 232 includes at least two second laser transmission sub-units 2321, at least two second laser receiving sub-units 2322, a second optical **combining sub-unit** 2323, and a second optical splitter sub-unit 2324, the at least two second laser emitting sub-units 2321 are connected to the second optical **combining sub-unit** 2323, and the at least two second laser emitting sub-units 2321 are further connected to the second multiplexing and separating unit 231, that is, the at least two second laser emitting sub-units 2321 are further connected with the at least two second signal multiplexing sub-units 2311 one to one. The at least two second laser receiving sub-units 2322 are connected to the second optical splitting sub-unit 2324, and the at least two second laser receiving sub-units 2322 are further connected to the second multiplexing and separating unit 231, that is, the at least two second laser receiving sub-units 2322 are further correspondingly connected to the at least two second signal separating sub-units 2312 on a one-to-one basis. The second laser emitting sub-unit 2321 is configured to convert the received uplink analog multiplexing signal into a corresponding single-wavelength optical signal, and the second optical combining sub-unit 2323 is configured to perform wavelength division multiplexing on the single-wavelength optical signals generated by the at least two second laser emitting sub-units 2321 into a second optical signal, and send the second optical signal to the optical fiber sub-module 22 for transmission of the optical signal. The second optical **splitting** sub-unit 2324 is configured to receive the first optical signal transmitted by the optical fiber sub-module 22, and split the first optical signal into optical signals of various single wavelengths to enter the second laser receiving sub-units 2322 respectively, the second laser receiving sub-unit 2322 is configured to convert the received single-wavelength optical signals to corresponding downlink analog multiplexing signals, and send the signal to the corresponding second signal division unit 2312, so as to separate the downlink analog multiplexing signal (the first service signal and the first control signal). It should be noted that the second laser emitting sub-unit 2321 is an analog laser transmitter, and the second laser receiving sub-unit 2322 is an analog laser receiver. The working principle of the second laser emission sub-unit 2321 is as follows: an analog electric signal is input to a laser diode after being subjected to an impedance matching process, is emitted into a light wave, and is then subjected to an optical isolation process, so as to achieve isolation of different wavelengths and receiving and sending analog optical signals in different directions. The working principle of the second laser receiving sub-unit 2322 is as follows: an optical signal is restored to an electrical signal through a photoelectric conversion diode, and an analog electrical signal is output after impedance matching processing.

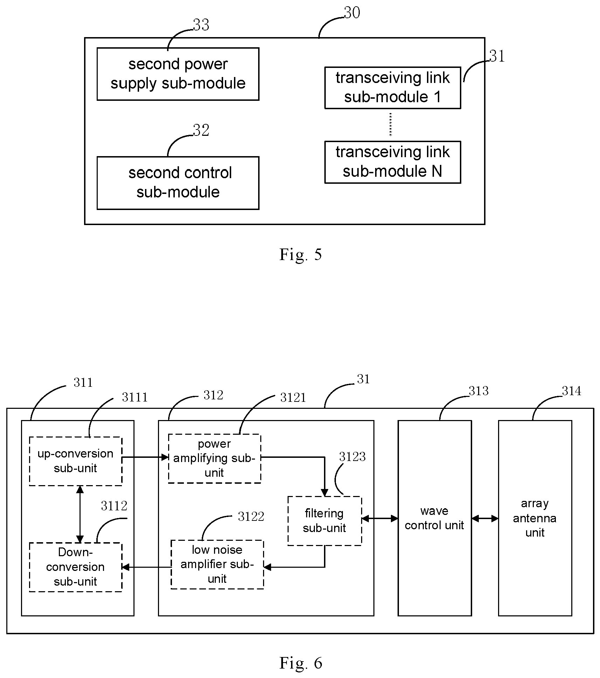

The millimeter wave remote-end module 30 is used for radiating and transmitting a downlink millimeter wave transmitting signal and radiating and receiving an uplink millimeter wave receiving signal, and is also used for conversion between the downlink radio-frequency sending signal and the downlink millimeter wave transmitting signal, and conversion between the uplink radio-frequency receiving signal and the uplink millimeter wave receiving signal. In an exemplary example, referring to figure 5, the millimeter wave remote-end module 30 includes at least two transceiving link sub-modules 31, and the number of the transceiving link sub-modules 31 is the number of transceiving channels of the millimeter wave remote-end module 30, i.e., N. The at least two transceiving link sub-modules 31 are connected to the second signal processing sub-module 23, the at least two transceiving link sub-modules 31 are connected to the second multiplexing and separating unit 231. In an exemplary example, the at least two transceiving link sub-modules 31 are connected to the at least two second signal multiplexing sub-units 2311 in one-to-one correspondence, the at least two transceiving link sub-modules 31 are also correspondingly connected with the at least two second signal separating sub-units 2312 on a one-to-one basis.

In this example, referring to figure 6, each transceiving link sub-module 31 includes a frequency conversion unit 311, a front end unit 312, a wave control unit 313, and an array antenna unit 314 that are connected in sequence, where the frequency conversion unit 311 is further connected to the millimeter wave transmission module 20. The frequency conversion unit 311 is used for converting an uplink radio-frequency receiving signal and an uplink **millimeter** wave receiving signal, and converting a downlink radio-frequency sending signal and a downlink **millimeter** wave sending signal, i.e. realizing the conversion of a first service signal and a second service signal in a middle radio-frequency band and a millimeter wave band, and controlling a working frequency band of the first service signal and the second service signal, so as to facilitate high-efficiency transmission; the front-end unit 312 is used for performing amplification and filtering processing on a downlink millimeter wave sending signal and receiving and amplification and filtering processing on an uplink millimeter wave receiving signal; the wave control unit 313 is configured to control phases and amplitudes of a downlink millimeter wave sending signal and an uplink millimeter wave receiving signal; the array antenna unit 314 is used for transmitting a downlink millimeter wave sending signal to air interface radiation and receiving an uplink millimeter wave receiving signal from air interface radiation. In an exemplary embodiment, the array antenna unit 314 transmits a received downlink millimeter wave sending signal to air interface radiation, and receives an uplink millimeter wave receiving signal from air interface radiation. In this example, efficient receiving and sending of uplink and downlink millimeter wave transceiving signals is implemented, electromagnetic compatibility of a millimeter wave transceiver device is improved, and a good shielding effect is achieved. In an exemplary example, the frequency conversion unit 311 includes an up-conversion sub-unit 3111 and a down-conversion sub-unit 3112 that convert a common millimeter wave local oscillation signal into a common millimeter wave local oscillation signal.

In an exemplary example, with continued reference to figure 6, the front end unit 312 includes a power amplification sub-unit 3121 and a low noise amplification sub-unit 3122 that are connected to the frequency conversion unit 311, and a filtering sub-unit 3123 respectively connected to the power amplification sub-unit 3121 and the low noise amplification sub-unit 3122, and the filtering sub-unit 3123 is further connected to the wave control unit 313. The power amplification sub-unit 3121 is used for performing power amplification processing (i.e. performing power amplification and sending processing) on the downlink mm-wave sending signal processed by the frequency conversion unit 311; the filtering sub-unit 3123 is configured to perform filtering processing on the downlink millimeter wave signal processed by the power amplifying sub-unit 3121, and perform filtering processing on the uplink millimeter wave receiving signal processed by the wave control unit 313; the low noise amplification sub-unit 3122 is configured to receive the uplink millimeter wave receiving signal processed by the filtering sub-unit 3123, and perform low noise amplification processing on the uplink millimeter wave receiving signal.

In this example, with continued reference to figure 5, each millimeter wave remote-end module 30 further includes a second control sub-module 32 connected to the millimeter wave transmission module 20 and configured to receive the first control signal transmitted by the millimeter wave transmission module 20 and transmit the second control signal to the millimeter wave transmission module 20. In an exemplary example, the second control sub-module 32 is connected with the second multiplexing and separating unit 231 in the second signal processing sub-module 23, in an exemplary embodiment, the second control sub-module 32 is connected to the second signal multiplexing sub-unit 2311 and the second signal separating sub-unit 2312, receive the first control signal through the second signal separating sub-unit 2312, and send the second control signal to the second signal multiplexing sub-unit 2311, so as to realize a response acknowledgement of the first control signal.

In this example, with continued reference to figure 5, the millimeter wave remote-end module further includes a second power supply sub-module 33, and the second power supply sub-module 33 is configured to supply power to the at least two transceiving link sub-modules 31 and the second control sub-module 32.

In an exemplary example, when the millimeter wave remote-end module 30 operates in downlink transmission, the second signal separation sub-unit 2312 separates a downlink analog multiplexing signal into a first service signal and a first control signal (the first control signal includes a radio-frequency reference signal, a millimeter wave local oscillator signal, and an intermediate frequency OOK control signal), the second signal separation sub-unit 2312 sends the first service signal and the millimeter wave local oscillator signal to the up-conversion sub-unit 3111, the up-conversion sub-unit 3111 performs frequency conversion processing on the first service signal of the intermediate radio-frequency band according to the frequency multiplication processing signal of the millimeter wave local oscillation signal, in this way, the working frequency band of the first service signal is controlled to the millimeter wave frequency band, and a downlink millimeter wave sending signal is obtained. The second signal separation sub-unit 2312 sends the radio-frequency reference signal and the control instruction signal to the second control sub-module 32, the second control sub-module 32 performs clock synchronization based on the radio-frequency reference signal and provides a clock reference for the millimeter wave remote-end module 30, executing a corresponding operation according to a control instruction signal, completing the control of other modules, and generating a corresponding intermediate frequency OOK response signal (i.e. a second control signal) according to an execution result. The down-link millimeter wave signal obtained through frequency conversion is sent to the power amplification sub-unit 3121 for power amplification, after being filtered by the filtering sub-unit 3123, the signal enters the wave control unit 313 to perform phase and amplitude control on the downlink millimeter wave signal, the downlink millimeter wave signal processed by the wave control unit 313 is sent to the array antenna unit 314, and the array antenna unit 314 radiates the downlink millimeter wave signal to an air interface to generate a radio signal of a millimeter wave band. When the millimeter wave remote-end module 30 operates in uplink receiving, the array antenna unit 314 receives a radio signal of a millimeter wave frequency band from air interface radiation to obtain an uplink millimeter wave receiving signal, after the phase and amplitude of the uplink millimeter wave **receiving signal** are controlled by the wave control unit 313, the uplink millimeter wave **receiving signal** enters the filtering sub-unit 3123 for filtering, after the filtering processing, the low noise amplification sub-unit 3122 enters a low noise amplification sub-unit 3112, the down-conversion sub-unit 3112 performs frequency conversion processing on the uplink millimeter wave signal according to the frequency multiplied signal of the millimeter wave local oscillation signal shared by the up-conversion sub-unit 3111, so as to control an operating frequency band of an uplink **millimeter** wave receiving signal to an intermediate radio-frequency band convenient for transmission, so as to obtain a second service signal, and transmits the second service signal to the second signal multiplexing sub-unit 2311, and the second control sub-module 32 generates and transmits the second control signal to the second signal multiplexing sub-unit 2311.

Provided is a millimeter wave transceiver device, comprising a digital intermediate frequency module, at least two millimeter wave transmission modules and at least two millimeter wave remote-end modules; the digital intermediate frequency module is connected to at least two millimeter wave transmission modules, and the at least two millimeter wave transmission modules are connected to at least two millimeter wave remote-end modules in one-to-one correspondence; the digital intermediate frequency module is used for sending downlink radio-frequency sending signal and receiving uplink radio-frequency receiving signal; the millimeter wave remote-end module is used for radiating and transmitting a downlink millimeter wave transmission signal and radiating and receiving an uplink millimeter wave receiving signal, and is also used for converting a downlink radio-frequency sending signal and a downlink millimeter wave transmission signal, and converting an uplink radio-frequency receiving signal and an uplink millimeter wave receiving signal; The millimeter wave transmission module is configured to transmit downlink radio-frequency sending signal and uplink radio-frequency receiving signal between the digital intermediate frequency module and the millimeter wave remote-end module. By means of the described method, the millimeter wave transceiver device in the present disclosure adopts a distributed architecture, and compared with an integrated AU architecture, the size and weight are reduced; in addition, it is convenient to deploy in a complex application scenario, such as a business area and indoor, which have hotspot and large-capacity requirements.

The following is an example, and specifically describes a process of transceiving upper and lower millimeter waves of two transceiving channels, which is specifically as follows.

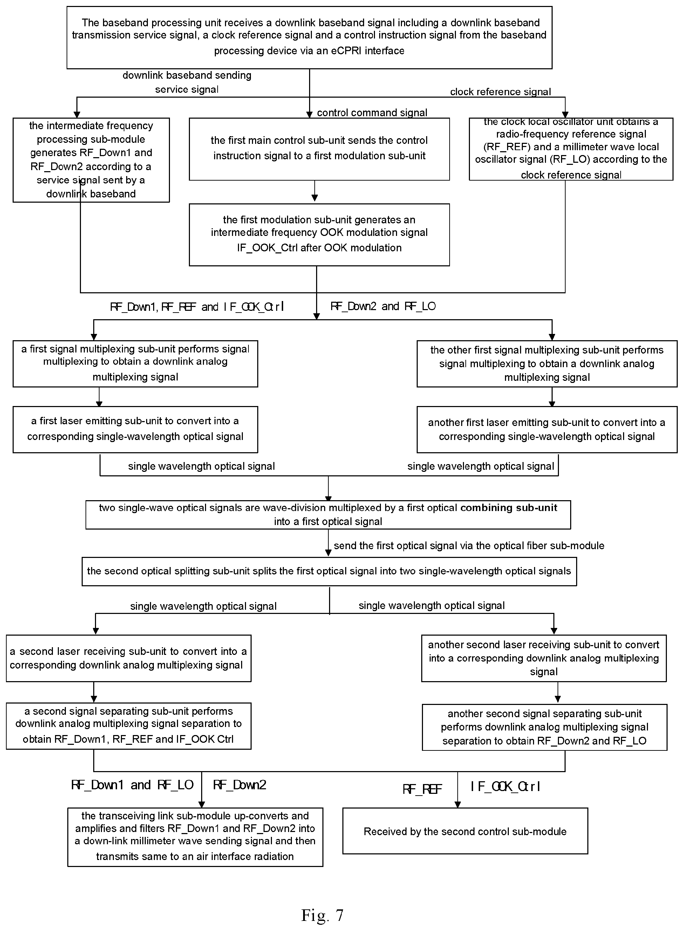

In a downlink sending direction, referring to figure 7, a baseband processing unit receives, from a baseband processing device via an eCPRI interface, a service signal comprising a downlink baseband sending signal, a clock reference signal and a control instruction signal, a baseband processing sub-module sends a downlink baseband transmission service signal to an intermediate frequency processing sub-module, so that the intermediate frequency processing sub-module generates a first service signal RF_Down1 and a first service signal RF_Down2 after performing intermediate radio-frequency processing on the downlink baseband transmission service signal, a baseband processing sub-module sends a clock reference signal to a clock local oscillator unit, and the clock local oscillator unit generates a clock and a synchronization signal required by running of a clock reference signal generation module itself according to the clock and the synchronization signal, a radio-frequency reference signal (RF_REF) and a millimeter wave local oscillator signal (RF_LO) are also generated in a one-to-one correspondence required by each millimeter wave remote-end module 30. A baseband processing sub-module sends a control instruction signal to a first main control sub-unit; the first main control sub-unit parses same into a control instruction, generates a corresponding control signal with regard to the control instruction for each of the millimeter wave remote-end modules 30, and sends same to respective corresponding first modulation sub-units; and an intermediate frequency OOK control signal IF_OOK_Ctrl corresponding to the millimeter wave remote-end modules 30 on a one-to-one basis is subjected to OOK modulation. RF_Down1, RF_REF and IF_OOK_Ctrl are sent to a first signal multiplexing sub-unit for multiplexing to obtain a downlink analog multiplexing signal, and RF_Down2 and RF_LO are sent to another first signal multiplexing sub-unit for multiplexing to obtain another downlink analog multiplexing signal. The two downlink analog multiplexing signals are sent to the corresponding first laser emitting sub-units to be converted into corresponding single-wavelength optical signals, and the two single-wavelength optical signals are split and combined into a first optical signal by the first optical combining sub-unit. The first optical signal is sent to a second optical **splitting** sub-unit via an optical fibre sub-module, the second optical **splitting** sub-unit splits the first optical signal into two single-wavelength optical signals, and each single-wavelength optical signal is sent to a corresponding second laser receiving sub-unit so as to be converted into a corresponding downlink analogue multiplexing signal. A downlink analog multiplexing signal is sent to a second signal separating sub-unit for separation to restore and obtain RF_Down1, RF_REF and IF_OOK_Ctrl. Another downlink analog multiplexing signal is sent to another second signal splitting unit for separation, and is restored to obtain RF_Down2 and RF_LO. RF_REF and IF_OOK_Ctrl are sent to a second control sub-module, and converted to generate a reference clock signal and an operation control signal of the system, so as to ensure synchronous operation of the system and operation according to a control instruction. RF_LO is sent to a frequency conversion unit in the transceiving link sub-module, and is used as a millimeter wave local oscillator signal required by the frequency conversion units in all the transceiving link sub-modules. RF_Down1 is sent to a frequency conversion unit in a transceiving link sub-module; the frequency conversion unit uses the described frequency multiplied signal of RF_LO to convert RF_Down1 to a millimeter wave frequency band, and after being processed by a power amplification sub-unit, a filtering sub-unit and a wave control unit, a downlink millimeter wave signal corresponding to RF_Down1 is radiated and transmitted to an air interface via an array antenna unit. RF_Down2 is sent to a frequency conversion unit in another transceiving link sub-module; the frequency conversion unit uses a frequency multiplied signal of RF_LO to convert RF_Down2 to a millimeter wave frequency band; after being processed by a power amplification sub-unit, a filtering sub-unit and a wave control unit, a downlink millimeter wave signal corresponding to RF_Down2 is radiated and transmitted to an air interface via an array antenna unit.

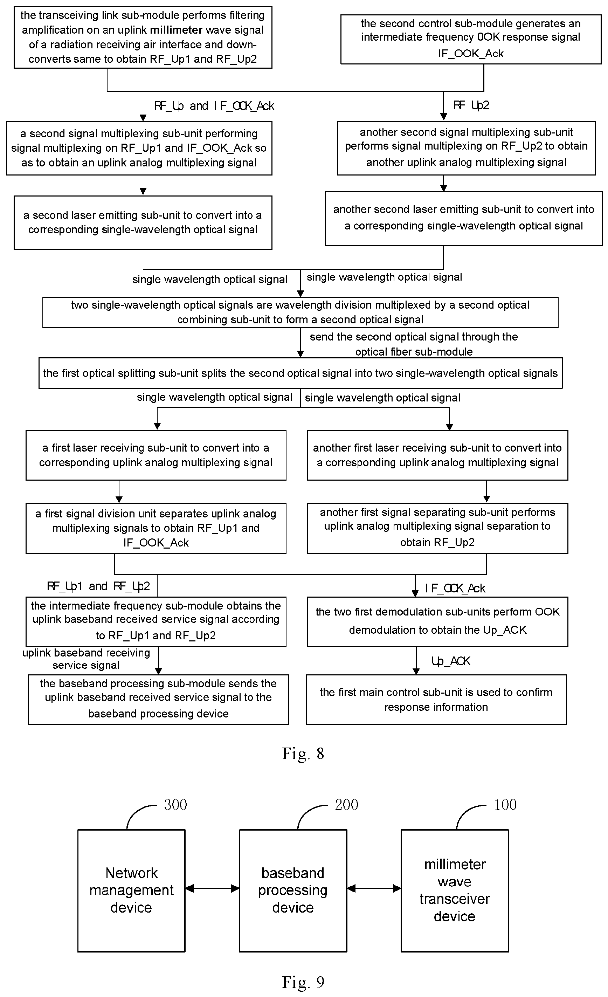

With reference to figure 8, in an uplink receiving direction, an array antenna unit in a transceiving link sub-module radiatively receives an uplink **millimeter** wave receiving signal, obtains a second service signal RF_Up1 after being processed by a wave control unit, a filtering sub-unit, a low noise amplification sub-unit and a frequency transformation unit, and sends RF_Up1 to a second signal multiplexing sub-unit. An array antenna unit in another transceiving link sub-module radiatively receives another uplink **millimeter** wave receiving signal, and after being processed by a wave control unit, a filtering sub-unit, a low noise amplification sub-unit and a frequency conversion unit, another second service signal RF_Up2 is obtained, and RF_Up2 is sent to another second signal multiplexing sub-unit. The second control sub-module demodulates the described intermediate frequency OOK control signal and executes a corresponding control instruction, generates a corresponding response response signal, and the intermediate frequency OOK modulates same into a second control signal IF_OOK_Ack. RF_Up1 and IF_OOK_Ack are sent to a second signal multiplexing sub-unit for multiplexing to obtain an uplink analog multiplexing signal, send RF_Up2 to another second signal multiplexing sub-unit for multiplexing to obtain another uplink analog multiplexing signal, send the uplink analog multiplexing signal to a corresponding second laser emitting sub-unit to convert the uplink analog multiplexing signal into a corresponding single-wavelength optical signal, the two single-wavelength optical signals are wavelength division multiplexed by the second optical combining sub-unit into a second optical signal. A second optical signal is sent to a first optical splitting sub-unit via an optical fibre sub-module; the first optical splitting sub-unit performs analogue splitting on the second optical signal into two single-wavelength optical signals; and each single-wavelength optical signal is sent to a corresponding first laser receiving sub-unit so as to be converted into a corresponding uplink analogue multiplexing signal. An uplink analog multiplexing signal is sent to a first signal separating sub-unit for separation, so as to restore and obtain a second service signal RF_Up1 and a second control signal **IF_OOK_Ack.** The other uplink analog multiplexing signal is sent to another signal separation sub-unit for separation to recover and obtain another second service signal **RF_Up2. IF_OOK_Ack** is sent to a first demodulation sub-unit for OOK demodulation to generate an Up_ACK, and the Up_ACK is sent to a first main control sub-unit for acknowledgement of response information. A second service signal of **RF_Up1** and **RF_Up2** is transmitted to an intermediate frequency sub-module for receiving and demodulating to obtain an uplink baseband received service signal; and the intermediate frequency sub-module transmits the uplink baseband received service signal to a baseband processing sub-module, and uploads the uplink baseband signal to a baseband processing device.

This example further provides a millimeter wave communication system. Referring to figure 9, the millimeter wave communication system includes a network management device 300, a baseband processing device 200, and a millimeter wave transceiver device 100 that are connected in sequence. The millimeter wave transceiver device 100 is the foregoing millimeter wave transceiver device. For a specific structure of the millimeter wave transceiver device, reference may be made to the foregoing description, and details are not described herein again in this embodiment.

The present disclosure provides a millimeter wave transceiver device, comprising a digital intermediate frequency module, at least two millimeter wave transmission modules, and at least two millimeter wave remote-end modules; the digital intermediate frequency module is connected to at least two millimeter wave transmission modules, and the at least two millimeter wave transmission modules are connected to at least two millimeter wave remote-end modules in one-to-one correspondence; the digital intermediate frequency module is used for sending downlink radio-frequency sending signal and receiving uplink radio-frequency receiving signal; the millimeter wave remote-end module is used for radiating and transmitting a downlink millimeter wave transmission signal and radiating and receiving an uplink millimeter wave receiving signal, and is also used for converting a downlink radio-frequency sending signal and a downlink millimeter wave transmission signal, and converting an uplink radio-frequency receiving signal and an uplink millimeter wave receiving signal; the millimeter wave transmission module is configured to transmit downlink radio-frequency sending signal and uplink radio-frequency receiving signal between the digital intermediate frequency module and the millimeter wave remote-end module. By means of the described method, the millimeter wave transceiver device in the present disclosure adopts a distributed architecture, and compared with an integrated AU architecture, the size and weight are reduced; in addition, it is convenient to deploy in a complex application scenario, such as a business area and indoor, which have hotspot and large-capacity requirements.

It should be noted that, in this specification, terms such as "first" and "second" are merely used to distinguish one entity or operation from another entity or operation, and do not necessarily require or imply any actual relationship or sequence between these entities or operations. Furthermore, the terms "include", "comprise", or any other variant thereof are intended to cover a non-exclusive inclusion, so that a process, circuit, article, or device that includes a series of elements not only includes those elements, but also includes other elements that are not explicitly listed, or further includes inherent elements of the process, circuit, article, or device. An element defined by the sentence "include a..." does not exclude other same elements existing in the process, circuit, article, or device that includes the element, unless more constraints are set forth.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure.

Accordingly, the present disclosure will not be limited to the embodiments shown herein but is to be accorded the widest scope consistent with the principles and novel features applied herein.

## Claims

1. A millimeter wave transceiver device, comprising: a digital intermediate frequency module, at least two millimeter wave transmission modules, and at least two millimeter wave remote-end modules; wherein,
the digital intermediate frequency module is connected to at least two of the millimeter wave transmission modules, and the at least two of the millimeter wave transmission modules are connected to at least two of the millimeter wave remote-end modules in one-to-one correspondence;
the digital intermediate frequency module is configured to send a downlink radio-frequency sending signal and receive an uplink radio-frequency receiving signal;
the millimeter wave remote-end module is configured to radiate and transmit a downlink millimeter wave sending signal, and radiate and receive an uplink millimeter wave receiving signal, and is also configured to convert between the downlink radio-frequency sending signal and the downlink millimeter wave sending signal, and convert between the uplink radio-frequency receiving signal and the uplink millimeter wave receiving signal;
the millimeter wave transmission module is configured to transmit the downlink radio-frequency sending signal and the uplink radio-frequency receiving signal between the digital intermediate frequency module and the millimeter wave remote-end module.

2. The device according to claim 1, wherein each of the millimeter wave transmission modules comprises: a first signal processing sub-module, an optical fiber sub-module and a second signal processing sub-module connected in sequence, wherein the first signal processing sub-module is further connected to the digital intermediate frequency module, and the second signal processing sub-module is further connected to the millimeter wave remote-end module; wherein,
the first signal processing sub-module is configured to convert the downlink radio-frequency sending signal into first optical signal, and convert the second optical signal into the uplink radio-frequency receiving signal;
the second signal processing sub-module is configured to convert the uplink radio-frequency receiving signal into the second optical signal, and convert the first optical signal into the downlink radio-frequency sending signal;
the optical fiber sub-module is configured to transmit the first optical signal and the second optical signal between the first signal processing sub-module and the second signal processing sub-module.

3. The device according to claim 2, wherein the downlink radio-frequency sending signal comprise at least two first service signals and a first control signal, and the uplink radio-frequency receiving signals comprise at least two second service signals and a second control signal;
the first signal processing sub-module comprises a first multiplexing separation unit and a first analog optical transceiving unit connected to each other, wherein the first multiplexing separation unit is further connected to the digital intermediate frequency module, and the first analog optical transceiving unit is further connected to the optical fiber sub-module; wherein,
the first multiplexing and separating unit is configured to multiplex at least two first service signals and the first control signal into at least two downlink analog multiplexing signals, and separate at least two uplink analog multiplexing signals into at least two second service signals and the second control signal;
the first analog optical transceiver unit is configured to convert at least two downlink analog multiplexing signals into the first optical signal, and convert the second optical signal into at least two uplink analog multiplexing signals.

4. The device according to claim 3, wherein the second signal processing sub-module comprises: a second multiplexing separation unit and a second analog optical transceiver unit connected to each other, wherein the second multiplexing separation unit is further connected to the millimeter wave remote-end module, and the second analog optical transceiver unit is further connected to the optical fiber sub-module; wherein,
the second multiplexing and separating unit is configured to multiplex at least two second service signals and the second control signal into at least two uplink analog multiplexing signals, and separate at least two downlink analog multiplexing signals into at least two first service signals and a first control signal;
the second analog optical transceiver unit is configured to convert at least two uplink analog multiplexing signals into the second optical signal, and convert the first optical signal into at least two downlink analog multiplexing signals.

5. The device according to claim 3, wherein each of the millimeter wave remote-end modules comprises at least two transceiving link sub-modules, each of the transceiving link sub-modules comprising a frequency conversion unit, a front end unit, a wave control unit and an array antenna unit which are sequentially connected, wherein the frequency conversion unit is also connected to the millimeter wave transmission module; wherein,
the frequency conversion unit is configured to convert the uplink radio-frequency receiving signal and the uplink millimeter wave receiving signal, and convert the downlink radio-frequency sending signal and the downlink millimeter wave transmission signal;
the front-end unit is configured to perform amplification and filtering processing on the downlink millimeter wave sending signal and the uplink millimeter wave receiving signal;
the wave control unit is configured to control phases and amplitudes of the downlink millimeter wave sending signal and the uplink millimeter wave receiving signal;
the array antenna unit is configured to radiate and transmit the downlink millimeter wave sending signal to the air interface, and radiate and receive the uplink millimeter wave receiving signal from the air interface.

6. The device according to claim 5, wherein the front-end unit comprises: a power amplification sub-unit and a low noise amplification sub-unit that are connected to the frequency conversion unit, and a filtering sub-unit respectively connected to the power amplification sub-unit and the low noise amplification sub-unit, wherein the filtering sub-unit is further connected to the wave control unit; wherein,
the power amplification sub-unit is configured to perform power amplification processing on the downlink millimeter wave sending signal processed by the frequency conversion unit;
the filtering sub-unit is configured to perform filtering processing on the downlink millimeter wave sending signal processed by the power amplifying sub-unit, and perform filtering processing on the uplink millimeter wave receiving signal that has been processed by the wave control unit;
the low noise amplification sub-unit is configured to perform low noise amplification processing on the received uplink millimeter wave signal that has been processed by the filtering sub-unit.

7. The device according to claim 5, wherein the digital intermediate frequency module comprises: a baseband processing sub-module, and an intermediate frequency processing sub-module and a first control sub-module that are connected to the baseband processing sub-module, wherein the intermediate frequency processing sub-module and the first control sub-module are both connected to at least two millimeter wave transmission modules,
the baseband processing sub-module is configured to interactive a baseband signal with the baseband processing device;
the intermediate frequency processing sub-module is configured to send the at least two first service signals obtained by processing according to the downlink baseband signals to the millimeter wave transmission module and process the at least two second service signals transmitted by the millimeter wave transmission module to generate uplink baseband signals;
the first control sub-module is configured to send the first control signal obtained by processing according to the downlink baseband signal to the millimeter wave transmission module and receive the second control signal transmitted by the millimeter wave transmission module, wherein the second control signal is a reply response signal of the first control signal.

8. The device according to claim 7, wherein each of the millimeter wave remote-end modules further comprises: a second control sub-module, wherein the second control sub-module is connected to the millimeter wave transmission module; wherein,
the second control sub-module is configured to receive the first control signal transmitted by the millimeter wave transmission module and send the second control signal to the millimeter wave transmission module.

9. The device according to claim 8, wherein the digital intermediate frequency module further comprises: a first power supply sub-module; the millimeter wave remote-end module further comprises: a second power supply sub-module; wherein,
the first power supply sub-module is configured to supply power to the baseband processing sub-module, the intermediate frequency processing sub-module and the first control sub-module;
the second power supply sub-module is configured to supply power to the at least two transceiving link sub-modules and the second control sub-module.

10. A millimeter wave communication system, comprising a network management device, a baseband processing device and the millimeter wave transceiver device as claimed in any one of claim 1 to claim 9, the network management device, the baseband processing device and the millimeter wave transceiver device are sequentially connected.
